# EUROPEAN PATENT APPLICATION

(11) **EP 4 717 472 A1**
(43) Date of publication of application: **01.04.2026**
(21) Application number: 25204530.7
(22) Date of filing: 25.09.2025
(51) Int. Cl.: B60C 11/03, B60C 11/13, B60C 11/12

(54) **CHAMFERED TIRES**

(30) Priority: 30.09.2024 US 202463700868 P; 14.08.2025 US 202519299452
(71) Applicant: The Goodyear Tire & Rubber Company, Akron, OH 44316 (US)
(72) Inventor: Bokken, Stephane Laurent Claude, L-7750 Colmar-Berg (LU)
(74) Representative: Kutsch, Bernd

(57) **Abstract**

A tire (10) is disclosed having a tread (12), an inner shoulder (14) and an outer shoulder (16). The tread (12) comprises V-shaped grooves (18) projecting in a tire circumferential direction and extending from the inner shoulder (14) to the outer shoulder (16), the V-shaped grooves (18) being arranged along the tire circumferential direction. The tire (10) further comprises tread blocks (20) separated said V-shaped grooves (18), each of the tread blocks (20) comprising a leading edge (40) and a trailing edge (42), wherein at least one of the leading edges (40) and the trailing edges (42) of the tread blocks (20) comprises a chamfer.

## Description

### Field of the Invention

The present invention relates to a tire having tread blocks, wherein at least one of the leading edges and the trailing edge of the tread blocks comprises a chamfer.

### Background of the Invention

US 4,057,089 A relates to a pneumatic tire for motor vehicles having a circumferential tread surface with molded-in grooves extending in a direction transverse to the circumferential direction of the tire, in which the grooves extend from a central circumferential tread surface section of the tire toward both lateral tire sides while following the curvature of a parabola of a second order.

### Summary of the Invention

The invention relates to a tire in accordance with claim 1.

Dependent claims refer to preferred embodiments of the invention.

A first aspect of the present invention relates to a tire having a tread, an inner shoulder and an outer shoulder, the tread comprising V-shaped grooves projecting in a tire circumferential direction and extending from the inner shoulder to the outer shoulder, the V-shaped grooves being arranged along the tire circumferential direction, the tire further comprising tread blocks separated said V-shaped grooves, each of the tread blocks comprising a leading edge and a trailing edge, wherein at least one of the leading edges and the trailing edge of the tread blocks comprises a chamfer.

Tires according to the first aspect of the present invention exhibit improved acceleration, braking in unfavorable conditions (e.g., snowy roads) than tires without a chamfer.

Both the leading edge and the trailing edge of the tread blocks may comprise a chamfer.

In an embodiment, the at least one of the leading edge and the trailing edge of the tread blocks have a length. The chamfer of the tread blocks may extend along a part of said length of the at least one of the leading edge and the trailing edge of the tread blocks.

In an embodiment, the at least one of the leading edge and the trailing edge of the tread blocks have a length. The chamfer of the tread blocks may extend along all of the length of the at least one of the leading edge and the trailing edge of the tread blocks.

The tread blocks may further comprise one or more sipes extending in a tire width direction. The tire width is the width of the tire along the axial direction.

The one or more sipes may comprise at least one of: one or more linear portions, and one or more curved portions.

In an embodiment, the one or more sipes have a depth, the depth of the one or more sipes may be comprised in the range from 1 mm to 10 mm, preferably in the range from 4 mm to 9 mm, even more preferably in the range from 6 mm to 8 mm.

In an embodiment, each of the tread blocks comprise a single sipe extending in a tire width direction.

Each of the one or more sipes may comprise a leading edge and a trailing edge, wherein at least one of the leading edge and the trailing edge of the one or more sipes comprises a chamfer. In an embodiment, both the leading edge and the trailing edge of the one or more sipes comprise a chamfer.

In a preferred embodiment, the chamfer of each of the tread blocks has a transversal section. The transversal section may have a shape selected from: a linear shape, a square shape or a circular shape. The transversal section of the chamfer of each of the tread blocks may (all) have the same shape. Alternatively, the transversal section of each of the tread blocks may be independently selected from: a linear shape, a square shape or a circular shape.

In a preferred embodiment, the chamfer of each of the one or more sipes has a transversal section, the transversal section having a shape selected from: a linear shape, a square shape or a circular shape. The transversal section of the chamfer of each of the one or more sipes may all have the same shape. Alternatively, the transversal section of each of the one or more sipes may be independently selected from: a linear shape, a square shape or a circular shape.

In preferred embodiments, the chamfer of the tread blocks has a width and a depth, wherein at least one of the width and depth of the chamfer of the tread blocks may be comprised in the range from 0.5 mm to 5 mm, preferably in the range from 0.7 mm to 3 mm, even more preferably in the range from 1 mm to 2 mm.

In preferred embodiments, the chamfer of the one or more sipes has a width, wherein the width of the chamfer of the one or more sipes is comprised in the range from 0.5 mm to 5 mm, preferably from 2 mm to 3 mm.

In preferred embodiments, the chamfer of the one or more sipes having a depth, wherein the depth of the chamfer of the one or more sipes is comprised in the range from 0.5 mm to 5 mm, preferably in the range from 0.7 mm to 3 mm, even more preferably in the range from 1 mm to 2 mm.

The tread blocks may further comprise one or more circumferential slats extending from the trailing edge to, at least partially, the leading edge of the tread blocks. In an embodiment the circumferential slats extend from the trailing edge to the leading edge of the tread blocks, in the circumferential direction.

In a preferred embodiment, the one or more circumferential slats intersect the one or more sipes.

The tire may further comprise a plurality of equatorial tread lugs separated from each other by said V-shaped grooves as well as separated from the tread blocks by said V-shaped grooves.

In preferred embodiments, the equatorial tread lugs comprise one or more sipes.

A second aspect of the present invention relates to a tire having a tread, an inner shoulder and an outer shoulder. The tread comprises V-shaped grooves projecting in a tire circumferential direction and extending from the inner shoulder to the outer shoulder, the V-shaped grooves being arranged along the tire circumferential direction. The tire further comprises tread blocks separated said V-shaped grooves, each of the tread blocks comprising one or more sipes extending in a tire width direction, the one or more sipes having a leading edge and a trailing edge, wherein at least one of the leading edge and the trailing edge comprises a chamfer.

Tires according to the second aspect of the present invention exhibit improved acceleration, braking in favorable (e.g., dry roads) and unfavorable conditions (e.g. wet or snowy roads) and also a better snow grip than tires without a chamfer.

Of course, all embodiments disclosed for the tire according to the first aspect of the invention are contemplated for the tire according to the second aspect of the present invention.

In the present document, the verb "to comprise" and the expression "to be comprised of" are used as open transitional phrases meaning "to include" or "to consist at least of". Unless otherwise implied by context, the use of singular word form is intended to encompass the plural, except when the cardinal number "one" is used: "one" herein means "exactly one". Ordinal numbers ("first", "second", etc.) are used herein to differentiate between different instances of a generic object; no particular order, importance or hierarchy is intended to be implied by the use of these expressions. Furthermore, when plural instances of an object are referred to by ordinal numbers, this does not necessarily mean that no other instances of that object are present (unless this follows clearly from context). When reference is made to "an embodiment", "one embodiment", "embodiments", etc., this means that these embodiments may be combined with one another. Furthermore, the features of those embodiments can be used in the combination explicitly presented but also that the features can be combined across embodiments without departing from the invention, unless it follows from context that features cannot be combined.

### Definitions

As used herein, the "shoulder" of a tire is a rubber section between the tread and the sidewall. The "inner shoulder" is the shoulder that is located on the inner side of the tire when mounted on a vehicle (the inner shoulder is not visible when mounted). Conversely, the "outer shoulder" is the shoulder that is located on the outer side when mounted on a vehicle (the outer shoulder can be readily seen when mounted).

As used herein, a "circumferential direction" is a direction around a circumference of the tire.

As used herein, a "tread" of a tire refers to a zone of the tire that contacts the road or the ground when the tire having its rated inflation pressure is mounted to a vehicle.

As used herein a "tread block" is a rubber portion of the tread that protrudes from the surface of the tire. It is a part of the tire that touches the road or ground. A tread block is a raised rubber portion of the tread that contacts the road surface. As used herein, a "groove" of the tread is a chunk of rubber of the tread that is depressed (with respect to the tread block) and does not contact the road or ground.

As used herein, a "leading edge" of the tread block or sipe is the edge that contacts the road or ground first, while the "trailing edge" of the tread block or sipe is the edge that come into contact with the road or ground last (i.e., after the leading edge), when the tire is mounted to the vehicle and is in rotation on the road or ground.

The expressions "axial" and "axially" are used herein to refer to lines or directions that are parallel to the axis of rotation of the tire.

The expression "equatorial plane" means the plane perpendicular to the tire's axis of rotation and passing through the geometrical center of the tire's tread. In particular, as used herein, "equatorial tread lugs" are tread lugs that are located at (or near to) the equatorial plane.

The expressions "radial" and "radially" are used to mean the direction of a line intersecting the tire's axis of rotation at right angle.

As used herein, a "sipe" is a depression in a tire block.

### Brief Description of the Drawings

The invention will be described by way of example and with reference to the accompanying drawings in which:
FIG. 1 shows two views of a tire 10 according to an embodiment of the present invention;
FIG. 2 shows a unit profile 28 that is repeated along the circumference of the tire 10, according to an embodiment of the present invention;
FIG. 3 shows transversal sections of the tread blocks according to embodiments of the present invention;
FIG. 4 illustrates the impact of linear chamfers on acceleration in snowy conditions;
FIG. 5 illustrates the impact of linear chamfers on braking in snowy conditions; and
FIG. 6 illustrates the impact (acceleration and braking) of linear chamfers on located on the leading edge of the sipe and trailing edge of the tread block, in snowy conditions.

### Detailed Description of Preferred Embodiments of the Invention

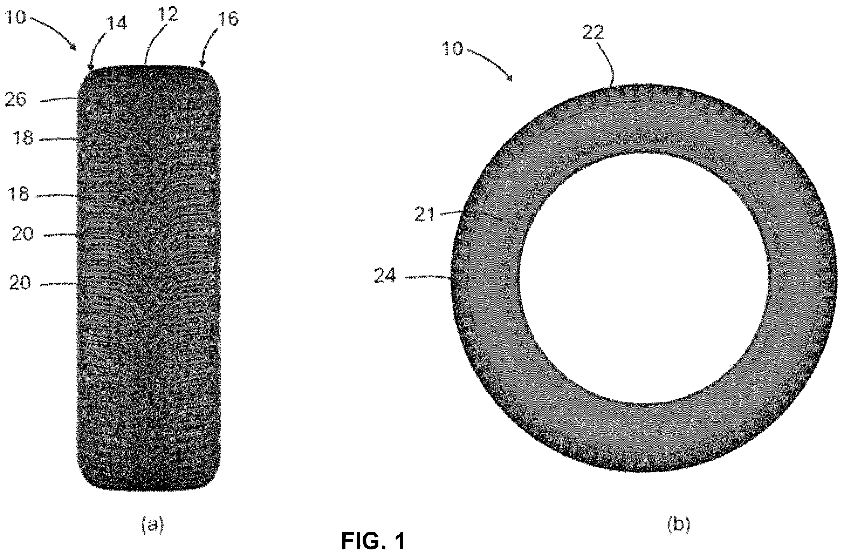

FIG. 1 shows two views of a tire 10 according to an embodiment of the present invention. Specifically, FIG. 1(a) shows a tread 12 of the tire 10. The tire 10 comprises also an inner shoulder 14 and an outer shoulder 16. The inner shoulder 14 is the shoulder that is facing the vehicle, when the tire 10 is mounted on the vehicle. Conversely, the outer shoulder 16 is the shoulder the is facing the environment (i.e., opposite to the vehicle), when the tire 10 is mounted on the vehicle. The tire 10 further comprises V-shaped grooves 18 arranged along the tire circumferential direction. In the present embodiment, the "V" shape of the grooves 18 is arranged so that the two top ends of the "V" are located at the inner shoulder 14 and the outer shoulder 16, while the lower end of the "V" is located in the vicinity of the equatorial plane. As shown in FIG. 1(a), a plurality of grooves 18 are arranged along the circumference of the tire 10, spaced apart from each other in the shoulders region. FIG. 1(b) shows a side view of the tire 10, showing in particular a sidewall 21. Also shown in FIG. 1(b) are the ends 22 of the V-shaped grooves 18, which are arranged so that the V-shaped grooves 18 allow for liquid to be expelled from the V-shaped grooves 18 into the environment.

Between the plurality of V-shaped grooves 18 are located tread blocks 20 (see FIG. 1(a)), which extend from the vicinity of the equatorial plane to the inner or outer shoulders 14, 16. Ends 24 of the tread blocks 20 are also shown in FIG. 1(b). Of course, in other embodiments, the tread blocks 20 may extend from inner shoulder 14, through the equatorial plane, to the outer shoulder 16. In that case, the V-shaped grooves 18 are spaced apart in the vicinity of the equatorial plane, in contrast with the embodiment depicted in FIG. 1(a) wherein the V-shaped grooves 18 are intersecting in the vicinity of the equatorial plane, so as to provide a circumferential zig-zag shaped groove 26 around the equatorial plane.

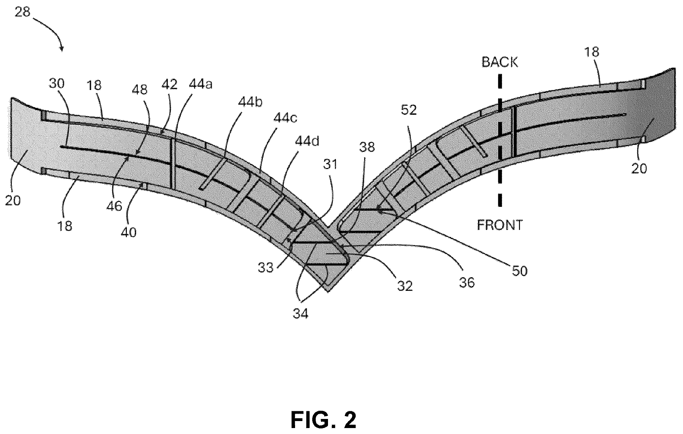

FIG. 2 shows a unit profile 28 that is repeated along the circumference of the tire 10, according to an embodiment of the present invention. FIG. 2 shows grooves 18 delimiting tread blocks 20. The tread blocks 20 comprise a (single) sipe 30 that extends in a tire width direction, i.e., in an axial direction of the tire 20. In other embodiments, the tread blocks 20 may comprise a plurality of sipes, extending in an axial direction of the tire 20. **In** any case, the sipe 20 may comprise one more linear portions (as depicted in FIG. 2) and/or one or more curved portions (e.g. a serpentine portions). As depicted in FIG. 2, the sipe 30 is arranged so that a distance between the sipe 30 and the edges of the tread block is constant. The end 31 of the sipe that is the closest to the equatorial plane may coincide with the end 33 (i.e. wall) of the tread block 20 that is the closest to the equatorial plane so that the sipe 20 is (fluidically) connected to the grooves 18.

In addition, the tire 10 comprises a plurality of equatorial tread lugs 32 separated from each other by the V-shaped grooves 18 and also separated from the tread blocks by the V-shaped grooves 18. The equatorial tread lugs 32 are located in the vicinity of the equatorial plane, along the circumference of the tire 10. As depicted in FIG. 2, the equatorial tread lugs 32 are arranged so as to alternate around the equatorial plane, in the sense that a first equatorial tread lug is located substantially on one side of the equatorial plane and a second, adjacent, equatorial tread lug is located substantially on the other side of the equatorial plane. The tread lugs 32 may also comprise one or more sipes 34. The one or more sipe 34 have a substantially axial extension. Some ends 36 of the one or more sipes 34 may coincide with the ends 38 (i.e. walls) of the tread lugs 32 so that some of the one or more sipes 34 are (fluidically) connected to the grooves 18.

Each of the tread block 20 comprises a leading edge 40 and a trailing edge 42. The leading edge 40 contacts the road or ground prior to the trailing edge 42 when the vehicle is in motion and the tire are mounted to the same.

The tread blocks 20 comprise one or more circumferential slats 44a, 44b, 44c, 44d (i.e., having a circumferential extension). The slats may extend from the trailing edge 42 to the leading edge 40 of the tread blocks 20 (e.g., 44a, 44c and 44d). In that case, the slats fluidically connect two distinct grooves 18. The slats 44 may also not reach the leading edge 40 of the tread blocks 20 (see e.g., 44b). The slats 44a, 44b, 44c, 44d are arranged at an axial distance from each other. Also, the slats 44a, 44b, 44c, 44d may intersect the sipe 30 (or the plurality of sipes 30 in corresponding embodiments).

In the same way as the tread blocks 20, the sipes 34 of the equatorial tread lugs 32 and the (one or more) sipes 30 of the tread blocks 20 comprise a leading edge and a trailing edge. More particularly, the (one or more) sipes 30 of the tread blocks 20 comprise a leading edge 46 and a trailing edge 48 and the sipes 34 of the equatorial tread lugs 32 comprise a leading edge 50 and a trailing edge 52.

Any of the leading edges and trailing edges of the tread blocks 20, of the sipes of the tread blocks, and of the equatorial tread lugs may comprise a chamfer. The chamfer may be provided to the trailing and/or leading edges by cutting and/or by the mold used in the tire molding process (in other words, the chamfer may be molded).

The chamfers of the tread blocks 20, of the sipes of tread blocks 20 and/or of the equatorial tread lugs 32 may extend along a part, or along all, of the length of the corresponding leading edge and the trailing edge.

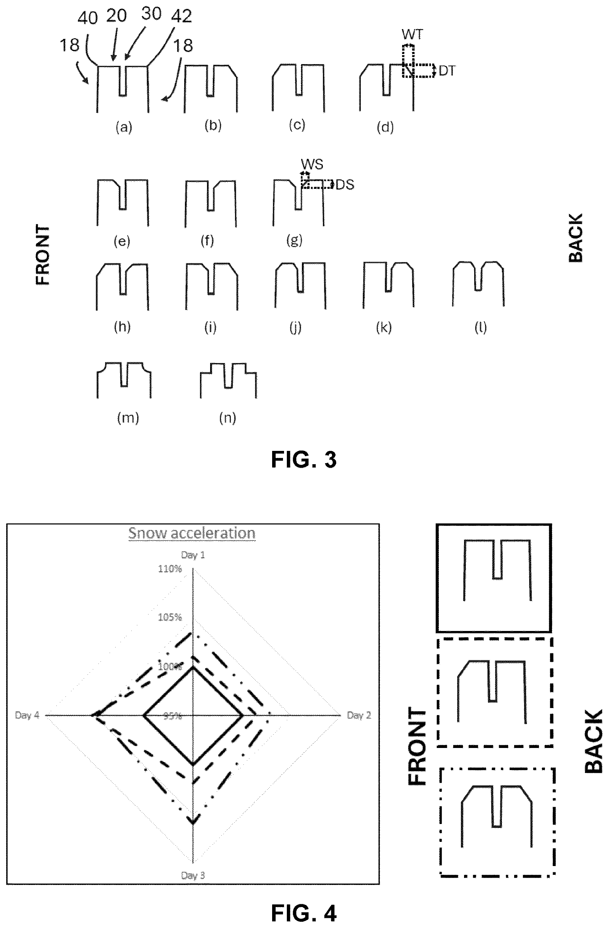

The chamfers of the tread blocks 20, of the sipes of tread blocks 20 and/or of the equatorial tread lugs 32 have a transversal section. The transversal section is a plane that is normal to the wall of the sipes. Exemplary transversal sections of the tread blocks 20 and of the sipes of tread blocks 20 are depicted in FIG. 3(a)-(n), at position depicted in FIG. 2. The description of the transversal sections of chamfers below applies, mutatis mutandis, for transversal sections of the chamfers of the sipes of the equatorial lugs 32.

Specifically, FIG. 3(a) depicts a comparative transversal section of the tread block 20, wherein the edges are not chamfered. FIG. 3(b)-(n) depicts exemplary embodiments of the present invention, wherein the shape of each of the chamfer are linear (FIG. 3(b)-(l)), square (FIG. 3(n)) or circular (FIG. 3(m)). Of course, any (combination) of these shapes may be applied to any of the leading or trailing edges. While FIG. 3(b)-(n) shows examples wherein all the shapes are identical, shapes of the chamfers may be different depending on their location. In details, FIG. 3(b)-(l) shows one or more linear chamfers on:
(b) the trailing edge of the tread block;
(c) the leading edge of the tread block;
(d) the leading and trailing edges of the tread block;
(e) the leading edge of the sipe;
(f) the trailing edge of the sipe;
(g) the leading and trailing edges of the sipe;
(h) the leading edge of the tread block and the trailing edge of the sipe
(i) the trailing edge of the tread block and the leading edge of the sipe;
(j) the leading edge of the tread block and the leading edge of the sipe;
(k) the trailing edge of the sipe and the trailing edge of the tread block; and
(l) both leading and trailing edges of the tread block and the sipe.
FIG. 3(m) show circular chamfers on the leading and trailing edges of the tread block. FIG. 3(n) show square chamfers on the leading and trailing edges of the tread block.

The chamfers of the tread blocks have a width (WT) and a depth (DT). At least one of the width and depth of the chamfer of the tread blocks is comprised in the range from 0.5 mm to 5 mm.

The chamfer of the sipes have a width (WS) and a depth (DS). At least one of the width and the depth are comprised in the range from 0.5 mm to 5 mm. In case of circular chamfers, the radius of curvature is comprised in the range from 0.5 mm to 5 mm. The same applies mutatis mutandis to the chamfers of the of the tread lugs 32.

The sipes have a depth (D) being comprised in the range from 0.5 mm to 10 mm.

FIG. 4 illustrates the impact of linear chamfers on acceleration in snowy conditions, for a tread profile as illustrated in FIG. 2, with a chamfer width and a chamfer depth of 2 mm. Four geometries are tested:
- (plain lines) reference tire without chamfers (100%);
- (dashed lines) tire with a tread block having a chamfer on the leading edge; and
- (dot-dot-dashed lines) tire with a tread block having a chamfer on both the leading edge and the trailing edge.
The tests were conducted on four days. As shown, having a chamfer on both trailing and leading edges improves acceleration by 4% on average, with respect to the reference tire.

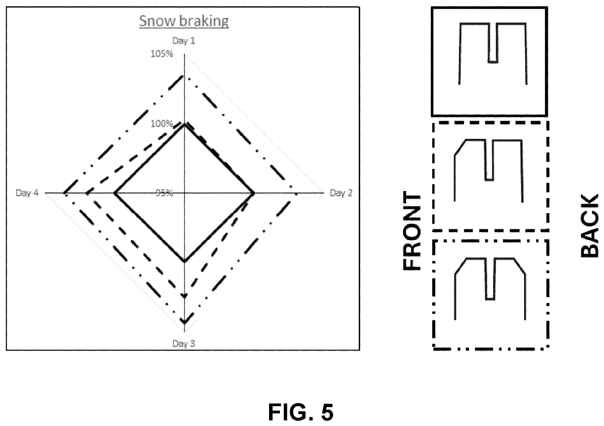

FIG. 5 illustrates the impact of linear chamfers on braking in snowy conditions, for a tread profile as illustrated in FIG. 2. with a chamfer width and a chamfer depth of 2 mm. Four geometries are tested:
- (plain lines) reference tire without chamfers (100%);
- (dashed lines) tire with a tread block having a chamfer on the leading edge; and
- (dot-dot-dashed lines) tire with a tread block having a chamfer on both the leading edge and the trailing edge.
The tests were conducted on four days. As shown, having a chamfer on both trailing and leading edges improves braking by 3% on average, with respect to the reference tire.

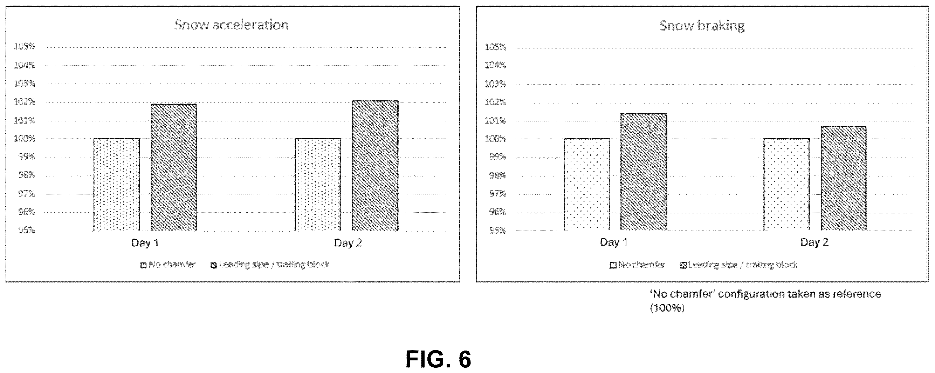

Also tested, on 2 different days, is the impact of linear sipe chamfers on acceleration and braking in snowy conditions, for a tread profile as illustrated in FIG. 2. Results are reported in Fig. 6.

In Fig. 6, the absence of chamfers establishes the baseline of the test (as for e.g., FIG. 5). Results are reported for a chamfer on the leading edge of the sipe in combination with a chamfer on the trailing edge of the tread block. As can be readily seen, a chamfer on the leading edge of the sipe in combination with a chamfer on the trailing edge of the tread block is beneficial for both acceleration and braking.

## Claims

1. A tire having a tread (12), an inner shoulder (14) and an outer shoulder (16), the tread (12) comprising V-shaped grooves (18) projecting in a tire circumferential direction and extending from the inner shoulder (14) to the outer shoulder (16), the V-shaped grooves (18) being arranged along the tire circumferential direction, the tire (10) further comprising tread blocks (20) separated said V-shaped grooves (18), each of the tread blocks (20) comprising a leading edge (40) and a trailing edge (42), wherein at least one of the leading edges (40) and the trailing edges (42) of the tread blocks (20) comprises a chamfer.

2. The tire according to claim 1, wherein both the leading edge (40) and the trailing edge (42) of the tread blocks (20) comprise a chamfer.

3. The tire according to claim 1 or 2, wherein the at least one of the leading edge (40) and the trailing edge (42) of the tread blocks (20) have a length, wherein the chamfer of the tread blocks (20) extends along a part or only along a part of said length of the at least one of the leading edge (40) and the trailing edge (42) of the tread blocks (20).

4. The tire according to at least one of the previous claims 1 or 2, wherein the at least one of the leading edge (40) and the trailing edge (42) of the tread blocks (20) have a length, wherein the chamfer of the tread blocks (20) extends along all of the length of the at least one of the leading edge (40) and the trailing edge (42) of the tread blocks (20).

5. The tire according to at least one of the previous claims, the tread blocks (20) further comprising one or more sipes (30) extending in a tire width direction, the one or more sipes (30) preferably comprising at least one of: one or more linear portions and one or more curved portions.

6. The tire according to at least one of the previous claims, wherein the one or more sipes (30) have a depth, the depth of the one or more sipes (30) being comprised within in the range from 1 mm to 10 mm; and/or wherein each of the tread blocks (20) comprise a single sipe (30) extending in a tire width direction.

7. The tire according to at least one of the previous claims, wherein each of the one or more sipes (30) comprises a leading edge (46) and a trailing edge (48), wherein at least one or both of the leading edge (46) and the trailing edge (48) of the one or more sipes (30) comprises a chamfer.

8. The tire according to at least one of the previous claims, wherein:
(i) the chamfer of each of the tread blocks (20) has a transversal section, the transversal section having a shape selected from: a linear shape, a square shape or a circular shape, the transversal section of the chamfer of each of the tread blocks (20) having the same shape or the transversal section of each of the tread blocks (20) is independently selected from: a linear shape, a square shape or a circular shape; and/or
(ii) the chamfer of each of the one or more sipes (30) has a transversal section, the transversal section having a shape selected from: a linear shape, a square shape or a circular shape, the transversal section of the chamfer of each of the one or more sipes (30) having all the same shape or the transversal section of each of the one or more sipes (30) is independently selected from: a linear shape, a square shape or a circular shape.

9. The tire according to at least one of the previous claims, the chamfer of the tread blocks (20) having a width and a depth, wherein at least one of the width and depth of the chamfer of the tread blocks (20) is comprised in the range from 0.5 mm to 5 mm.

10. The tire according to at least one of the previous claims, the chamfer of the one or more sipes (30) having a width, wherein the width of the chamfer of the one or more sipes (30) is comprised in the range from 0.5 mm to 5 mm.

11. The tire according to at least one of the previous claims, wherein the tread blocks (20) further comprise one or more circumferential slats (44a, 44b, 44c, 44d) extending from the trailing edge (42) to, at least partially or fully, the leading edge (40) of the tread blocks (20).

12. The tire according to claim 11, wherein the one or more circumferential slats (44a, 44b, 44c, 44d) intersect the one or more sipes (30).

13. The tire according to at least one of the previous claims, further comprising a plurality of equatorial tread lugs (32) separated from each other and separated from the tread blocks (30) by said V-shaped grooves (18).

14. The tire according to claim 13, the equatorial tread lugs (32) comprising one or more sipes (34).

15. The tire according to at least one of the previous claims wherein the tire (10) is a winter tire or an all season tire having a respective sidewall marking.
